Europäisches Patentamt

European Patent Office

Office européen des brevets

(19)

(11) Veröffentlichungsnummer: **0 044 966**
**B1**

(12) # EUROPÄISCHE PATENTSCHRIFT

(45) Veröffentlichungstag der Patentschrift:
**29.10.86**

(21) Anmeldenummer: **81105179.6**

(22) Anmeldetag: **03.07.81**

(51) Int. Cl.⁴: **A 01 D 90/04**

(54) **Schneidwerk für landwirtschaftliche Geräte, insbesondere Selbstladewagen.**

(30) Priorität: **25.07.80 DE 3028306**

(43) Veröffentlichungstag der Anmeldung:
**03.02.82 Patentblatt 82/5**

(45) Bekanntmachung des Hinweises auf die Patenterteilung:
**29.10.86 Patentblatt 86/44**

(84) Benannte Vertragsstaaten:
**CH FR GB LI NL**

(56) Entgegenhaltungen:
**AT - B - 289 560**
**AT - B - 332 673**
**DE - A - 1 507 214**
**DE - B - 1 257 473**
**DE - U - 7 729 678**
**DE - U - 7 836 824**

(73) Patentinhaber: **Alois Pöttinger Maschinenfabrik GmbH, A-4710 Grieskirchen (AT)**

(72) Erfinder: **Peinthor, Anton, Pfarrhofsiedlung 16, A-4710 Grieskirchen (AT)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## Beschreibung

Die Erfindung betrifft ein Schneidwerk für landwirtschaftliche Geräte, insbesondere Selbstladewagen, zum Zerkleinern von Halm- und Blattgut, mit einer Aufnahmevorrichtung, einem diese mit einem Laderaum verbindenden, im wesentlichen vertikal verlaufenden Förderkanal einer Fördereinrichtung und wenigstens zwei in Förderrichtung übereinanderliegenden Messerreihen mit über die Breite des Förderkanals angeordneten Messern.

Ein solches Schneidwerk ist aus der AT-B-332 673 bekannt. Bei diesem Schneidwerk sind mehrere übereinander angeordnete Messerreihen an der Wand des Förderkanales ortsfest angebracht.

Der entscheidende Nachteil eines derartigen Schneidwerks besteht darin, dass das Nachschleifen der Messer dadurch sehr erschwert wird, dass die ortsfesten Messer einzeln abgenommen werden müssen oder die schwenkbare Messerreihe als Ganzes ausgebaut werden muss, was beim hohen Gewicht dieses Bauteiles wenigstens zwei Personen erforderlich macht. Der Einsatz scharfer Messer ist aber von grosser Bedeutung, weil stumpfe Messer bis zur 10fachen Schnittkraft scharfer Messer bedürfen, so dass bei gleichzeitig besonders hoher Abnutzung der Messer im Mittelbereich des Förderkanals, bedingt durch die ungleichmässige Verteilung des Erntegutes im Schward, der Schnittkraftbedarf bis auf das dreifache steigt. Das bedeutet entweder eine Verdoppelung des erforderlichen Drehmomentes oder eine auf die Hälfte verringerte Ladeleistung. Daraus ergibt sich die grosse Bedeutung, die einem Scharfhalten der Messer des Schneidwerks zukommt, demgegenüber alle anderen Massgaben, etwa eine Erhöhung der Zahl der Messerreihen oder eine Zahl der Förderelementreihen der Fördervorrichtung in den Hintergrund treten.

Weiterhin ist aus der AT-B-289 560 ein gattungsfremdes Schneidwerk bekannt, dessen Messer über Arme an einer gemeinsamen Schwenkachse befestigt und um diese von einer Betriebsstellung innerhalb des Förderkanales in eine Ruhestellung ausserhalb desselben schwenkbar sind. Dieses Schneidwerk weist nur eine einzige Messerreihe auf. In der Schleifstellung sind die Messerschneiden schräg nach unten gerichtet, wodurch diese nur von unten her zugänglich sind. Ein einfaches Schleifen der Messer ist auch bei diesem Schneidwerk nicht möglich.

Der Erfindung liegt somit die Aufgabe zugrunde, ein Schneidwerk der eingangs genannten Art so zu verbessern, dass das unter Umständen häufig erforderliche Schleifen der Messer wesentlich erleichtert wird.

Diese Aufgabe wird erfindungsgemäss dadurch gelöst, dass die Messer jeder Messerreihe jeweils in einem gemeinsamen Messerrahmen befestigt sind, und dass die Messerrahmen gemeinsam um eine tiefliegende Achse in eine im wesentlichen horizontale Schleifstellung ausserhalb des Förderkanalbereiches ausschwenkbar sind, in der die Messerschneiden nach oben gerichtet sind.

Damit wird der wesentliche Vorteil erreicht, dass die Messerrahmen von nur einer Person rasch ausgeschwenkt werden können, um dann mit einem Schleifwerkzeug geschärft zu werden, ohne dass die einzelnen Messer umständlich und mühsam ausgebaut oder die in die Betriebsstellung zuschaltbare Messerreihe als Ganzes ausgebaut werden muss.

In Weiterbildung der Erfindung ist vorgesehen, dass die miteinander verriegelbaren Messerrahmen zusätzlich um eine eigene Achse ausschwenkbar sind. In vorteilhafter Weise sind dabei die Messerrahmen am in Förderrichtung jeweils vorhergehenden Messerrahmen schwenkbar gelagert.

Bei einer solchen Ausgestaltung der Erfindung können bei Bedarf auch die einzelnen Messerrahmen zum Schleifen ausgeschwenkt werden, ohne dass die noch scharfen Messerreihen, die nicht geschliffen werden müssen, ebenfalls herausgeschwenkt werden müssen.

Um ein Aus- und Einschwenken der Messerrahmen zu erleichtern, kann eine Einrichtung zum Erzeugen der Schwenkkraft mit den Messerrahmen verbunden sein. Eine solche Einrichtung kann beispielsweise ein hydraulischer Kraftzylinder sein.

Nach einem weiteren Merkmal der Erfindung ist zur Begrenzung des Schwenkweges ein Anschlag für die Messerrahmen vorgesehen.

Die Erfindung ist nachstehend an zwei Ausführungsbeispielen erläutert, die in der Zeichnung dargestellt sind. Es zeigen:

Fig. 1 eine schematische Seitenansicht eines Schwenkwerkes gemäss der Erfindung,

Fig. 2 einen Teil des Schwenkwerks der Fig. 1 mit einem ausgeschwenkten Messerrahmen und

Fig. 3 die Seitenansicht eines anderen Schwenkwerkes gemäss der Erfindung mit drei Messerrahmen.

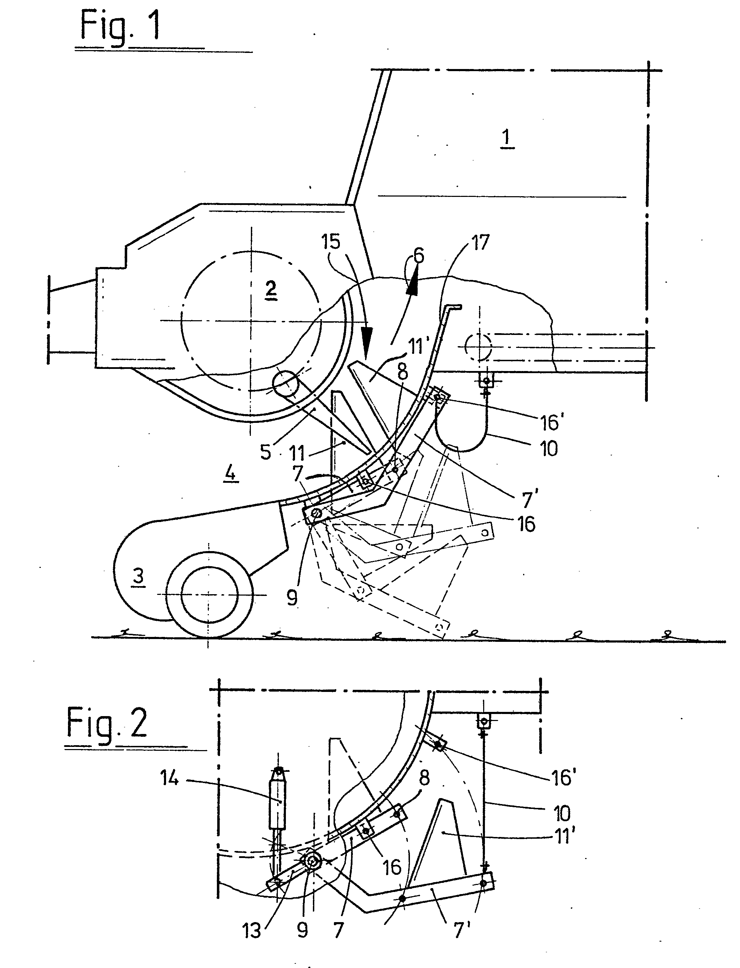

Fig. 1 zeigt den vorderen Teil eines Selbstladewagens mit einem Teil des Laderaums 1, einer als Trommelförderer ausgebildeten Fördervorrichtung 2 und einer Aufnahmevorrichtung 3.

Die Fördervorrichtung 2 ist mit zinkenförmigen Förderelementen 17 versehen, von denen in Fig. 1 nur eines dargestellt ist und die in einen Förderkanal 4 hineinragen, um das von der Aufnahmevorrichtung 3 erfasste Erntegut in Förderrichtung 6 nach oben in den Laderaum 1 zu schieben.

An der der Fördervorrichtung 2 gegenüberliegenden Begrenzungswand 17 des Förderkanals 4 ist eine Achse 9 befestigt, auf der schwenkbar zwei Messerrahmen 7 und 7' gelagert sind.

Der Messerrahmen 7 trägt eine Reihe von Messern 11, die durch die Begrenzungswand 17 in den Förderkanal 4 hineinragen, während der Messerrahmen 7' Messer 11' trägt, die in Schneidstellung über den Messern 11 und versetzt zu diesen angeordnet sind. Zur Verriegelung der Messer 11 und 11' in ihrer Betriebsstellung sind an der Begrenzungswand 17 Verriegelungsvorrichtungen 16 bzw. 16' vorgesehen, die beispielsweise aus Bügeln bestehen, durch die Bolzen gesteckt werden, um die Messerrahmen 7 und 7' in ihrer Betriebsstellung zu halten.

Um die beiden Messerrahmen 7 und 7' gemeinsam um die Achse 9 in die im wesentlichen horizontale Schleifstellung ausschwenken zu können, ist eine Verriegelungsvorrichtung 8 vorgesehen, die beispielsweise ebenfalls aus Bolzen besteht, um die beiden Messerrahmen 7 und 7' miteinander zu verbinden. In diesem miteinander verbundenen Zustand lassen sich die beiden Messerrahmen 7 und 7', wie in Fig. 1 gestrichelt dargestellt ist, gemeinsam in die Schleifstellung aus dem Förderkanal 4 herausschwenken. In dieser Stellung können die Messer 11 und 11' bequem mit einer Schleifhexe od.dgl. geschärft werden.

Wie in Fig. 1 weiter angedeutet ist, kann bei gelöster Verriegelungsvorrichtung 8 auch nur der untere Messerrahmen 7 in die Schleifstellung ausgeschwenkt werden, ohne dass dabei der Messerrahmen 7' mit der oberen Messerreihe 11' mitbewegt werden muss. Umgekehrt ist es auch möglich, bei ausgekuppelter Verriegelungsvorrichtung 8, eingerückter Verriegelungsvorrichtung 16 und ausgerückter Verriegelungsvorrichtung 16' nur den Messerrahmen 7' in die Schleifstellung zu schwenken.

In Fig. 2 ist gezeigt, dass am Messerrahmen 7 ein Hebel 13 befestigt ist, der mit der Kolbenstange einer als Hydraulikzylinder ausgebildeten Einrichtung 14 zum Erzeugen der Schwenkkraft angelenkt ist. Durch diese Einrichtung 14 wird das Ein- und Ausschwenken der Messerrahmen 7 und 7' erleichtert.

Fig. 2 zeigt ferner, dass der Messerrahmen 7' mit einem Anschlag 10 ausgerüstet ist, um die Schwenkbewegung des Messerrahmens 7' zu begrenzen. Hierbei ist der Anschlag 10 als Zugseil ausgebildet, das einerseits am Messerrahmen 7' und andererseits an der Unterseite des Selbstladewagens befestigt ist. Je nach der Länge des Seils kann die Messerreihe 11' in die im wesentlichen horizontale Schleifstellung oder nur in die Wartestellung geschwenkt werden, in der die Messer 11' gerade ausserhalb des Förderkanals 4 liegen, wenn nur die untere Messerreihe 11 zum Einsatz kommen soll und kein Kurzschnitt für Siliergut gewünscht wird.

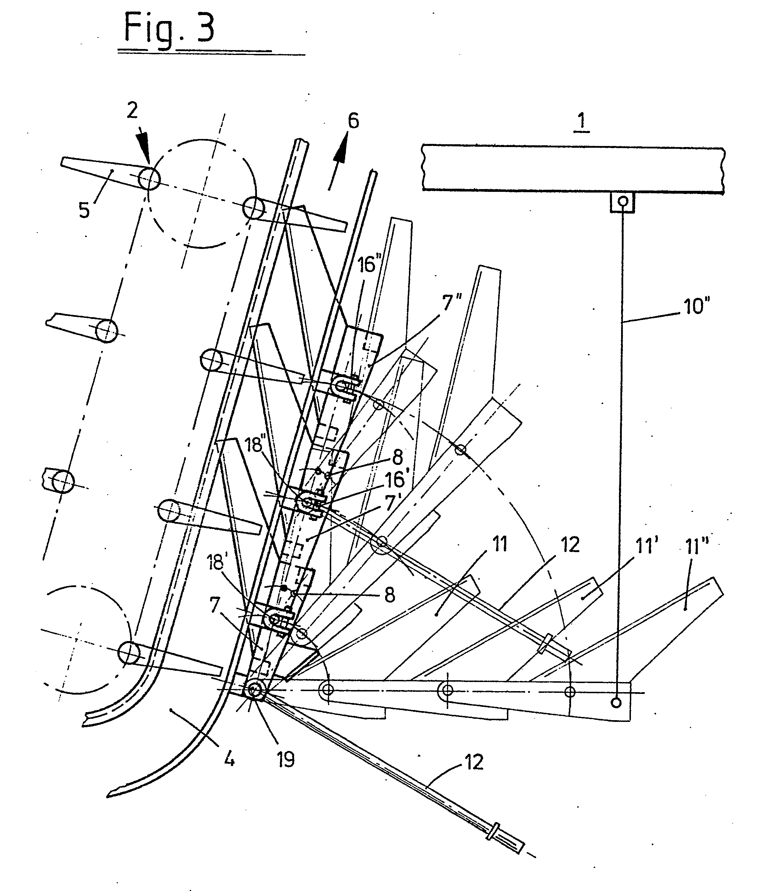

Fig. 3 zeigt eine Variante der Erfindung, bei der drei Messerreihen 11, 11' und 11'' in den Förderkanal 4 ragen. Hierbei ist die Fördervorrichtung 2 als Kettenförderer ausgebildet.

Jede der drei Messerreihen ist an einem eigenen Messerrahmen 7, 7' bzw. 7'' befestigt, welche durch Verriegelungsvorrichtungen 8 starr miteinander verbunden werden können. Diese Verriegelungsvorrichtungen 8 entsprechen den Verriegelungsvorrichtungen 8 beim Beispiel der Fig. 1 und 2. Bei eingekuppelten Verriegelungsvorrichtungen 8 können alle drei Messerrahmen gemeinsam um die tiefliegende Achse 19 in die Schneidstellung geschwenkt werden, in der sie durch den ebenfalls als Seil ausgebildeten Anschlag 10'' gehalten werden.

Bei der in Fig. 3 gezeigten Ausführung sind die in Förderrichtung 6 nachgeordneten Messerrahmen 7' und 7'' jeweils am vorhergehenden Messerrahmen 7 bzw. 7' schwenkbar gelagert, was besonders vorteilhaft ist, wenn der Raum hinter dem Förderkanal 4 begrenzt ist.

Um die Messerrahmen 7, 7' und 7'' einzeln oder gemeinsam in die Schleifstellung ausschwenken zu können, ist bei diesem Ausführungsbeispiel ein umsteckbarer Schwenkhebel 12 vorgesehen, der starr mit dem jeweils auszuschwenkenden Messerrahmen verbunden werden kann und der vor allem das Einschwenken der Messerrahmen nach erfolgtem Schleifen wesentlich erleichtert.

Auch bei diesem Ausführungsbeispiel ist es möglich, beispielsweise nur die oberste Messerreihe 11'' zu schleifen. Hierzu genügt es, die entsprechende Verriegelungsvorrichtung 16'' zu entriegeln, um den Messerrahmen 7'' um seine Schwenkachse 18'' am darunterliegenden Messerrahmen 7' zu schwenken. Entsprechendes gilt zum Ausschwenken der beiden Messerrahmen 7' und 7'' um ihre gemeinsame Schwenkachse 18' am untersten Messerrahmen 7.

Beim Ausführungsbeispiel der Fig. 3 ist nicht weiter dargestellt, dass jeder Messerrahmen einen eigenen Anschlag 10'' haben kann, um den Schwenkweg zu begrenzen. Eine besonders einfache Lösung ergibt sich dabei dann, wenn der Anschlag 10'' am selben Messerrahmen 7 bzw. 7' angebracht ist, an dem der jeweils darüberliegende Messerrahmen 7' bzw. 7'' gelagert ist.

Bei einer nicht dargestellten Variante der Erfindung ist in vorteilhafter Weise in Förderrichtung 6 gesehen ab dem zweiten Messerrahmen 7' jeder Messerrahmen 7'', 7''' usw. vom Förderkanal 4 zurückschwenkbar ausgebildet, während die Messer 11 des ersten Messerrahmens 1 nur einzeln und von Hand zurückschwenkbar sind. Dadurch können drei Messerrahmen sehr eng aneinandergereiht werden, wobei der erste Messerrahmen 7 nur null bis vier Messer für die Bearbeitung von Heu trägt. Die beiden folgenden Messerrahmen 7' und 7'' können dann die weiteren Messer 11' bzw. 11'' für das Schneiden von Grüngut oder Anwelkgut aufnehmen.

Noch günstiger wird die räumliche Anordnung im Sinne einer schneidtechnisch günstigen Anordnung, wenn ein Messerrahmen 7 mehrere Messerreihen 11 in gestaffelter Anordnung aufnimmt.

Im übrigen ergibt sich bei einer Anordnung von drei Messerrahmen 7 mit drei Messerreihen 11 in gestaffelter Anordnung, dass mit vier Förderkämmen die gleiche Verbesserung der Schneideigenschaften erreicht wird wie mit zwei Messerreihen 11 und sechs Förderkämmen, wobei ein weiterer Vorteil darin besteht, dass durch das höhere Gutpaket beim Schnitt der Anteil an langen Halmen wesentlich geringer gehalten wird.

**Patentansprüche**

1. Schneidwerk für landwirtschaftliche Geräte, insbesondere Selbstladewagen, zum Zerkleinern von Halm- und Blattgut, mit einer Aufnahmevorrichtung (3), einem diese mit einem Laderaum (1) verbindenden, im wesentlichen vertikal verlaufenden Förderkanal (4) einer Fördereinrichtung (15) und wenigstens zwei in Förderrichtung übereinanderliegenden Messerreihen mit über die Breite des Förderkanals angeordneten Messern (11, 11'), dadurch gekennzeichnet, dass die Messer (11 bzw. 11') jeder Messerreihe jeweils in einem gemeinsamen Messerrahmen (7 bzw. 7') befestigt sind, und dass die Messerrahmen (7, 7') gemeinsam um eine tiefliegende Achse (9) in eine im wesentlichen horizontale Schleifstellung ausserhalb des Förderkanalbereichs (4) ausschwenkbar sind, in der die Messerschneiden nach oben gerichtet sind.

2. Schneidwerk nach Anspruch 1, dadurch gekennzeichnet, dass die miteinander verriegelbaren Messerrahmen (7) zusätzlich um eigene Achsen (18) ausschwenkbar sind.

3. Schneidwerk nach Anspruch 2, dadurch gekennzeichnet, dass die Messerrahmen (7) am in Förderrichtung (6) jeweils vorhergehenden Messerrahmen schwenkbar gelagert sind.

4. Schneidwerk nach einem der Ansprüche 1 bis 3, dadurch gekennzeichnet, dass die Messerrahmen (7) mit einer Einrichtung (14) zum Erzeugen der Schwenkkraft verbunden sind.

5. Schneidwerk nach einem der Ansprüche 1 bis 3, dadurch gekennzeichnet, dass zum Aus- und Einschwenken der Messerrahmen (7) diese mit einem Schwenkhebel (12) verbindbar sind.

6. Schneidwerk nach einem der vorhergehenden Ansprüche, dadurch gekennzeichnet, dass zur Begrenzung des Schwenkweges ein Anschlag (10) für die Messerrahmen (7) vorgesehen ist.

## Claims

1. A cutting device for agricultural machines, especially self-loading trailers, for breaking up stalk and leaf material, comprising a receiving device (3), linked to a loading space (1) by the substantially vertically running conveying channel (4) of a conveying apparatus (15), and at least two cutter rows superposed in the conveying direction and with cutters (11, 11') arranged over the width of the conveying channel, characterized in that the cutters (11 or 11') in each row are each secured in a common cutter frame (7 or 7'), and that the cutter frames (7, 7') can be jointly swung out around a low-lying shaft (9) into a substantially horizontal grinding position outside the area of the conveying channel (4), in which position the cutting edges face upwards.

2. A cutting device according to claim 1, characterized in that the cutter frames (7), which can be bolted together, can also be swung out around individual shafts (18).

3. A cutting device according to claim 2, characterized in that the cutter frames (7) are fixed pivotally to the cutter frame preceding them in the conveying direction.

4. A cutting device according to any one of claims 1 to 3, characterized in that the cutter frames (7) are connected to a device (14) for producing the swinging force.

5. A cutting device according to any one of claims 1 to 3, characterized in that in order for the cutter frames (7) to be swung in and out they are connectable to a swinging lever (12).

6. A cutting device according to any one of the preceding claims, characterized in that a stop (10) is provided for the cutter frames (7) to restrict the swinging distance.

## Revendications

1. Dispositif de coupe pour engins agricoles, en particulier pour remorques autochargeuses, destiné à broyer un produit à chaumes et à feuilles et comprenant un dispositif récepteur (3), un canal d'acheminement (4) d'un dispositif de convoyage (15), s'étendant sensiblement verticalement et reliant ledit dispositif récepteur à un espace de chargement (1), ainsi qu'au moins deux rangées de couteaux, superposées dans la direction du convoyage et présentant des couteaux (11, 11') s'étendant sur la largeur du canal d'acheminement, caractérisé par le fait que les couteaux (11, 11', respectivement) de chaque rangée de couteaux sont à chaque fois fixés dans un cadre commun porte-couteaux (7, 7', respectivement); et par le fait que les cadres porte-couteaux (7, 7') peuvent pivoter conjointement, autour d'un axe surbaissé (9), à une position de raclement sensiblement horizontale, située à l'extérieur de la région du canal d'acheminement (4) et dans laquelle les tranchants des couteaux sont dirigés vers le haut.

2. Dispositif de coupe selon la revendication 1, caractérisé par le fait que les cadres porte-couteaux (7), pouvant être verrouillés les uns aux autres, peuvent pivoter en plus autour d'axes propres (18).

3. Dispositif de coupe selon la revendication 2, caractérisé par le fait que les cadres porte-couteaux (7) sont montés pivotants sur le cadre porte-couteaux respectivement précédent dans la direction du convoyage (6).

4. Dispositif de coupe selon l'une des revendications 1 à 3, caractérisé par le fait que les cadres porte-couteaux (7) sont reliés à un dispositif (14) pour engendrer la force de pivotement.

5. Dispositif de coupe selon l'une des revendications 1 à 3, caractérisé par le fait que, en vue du pivotement sortant et rentrant des cadres porte-couteaux (7), ces derniers peuvent être reliés à un levier pivotant (12).

6. Dispositif de coupe selon l'une des revendications précédentes, caractérisé par le fait qu'une butée (10) pour les cadres porte-couteaux (7) est prévue afin de limiter la course de pivotement.

## Fig. 1

## Fig. 2

# Fig. 3